# EUROPEAN PATENT SPECIFICATION

(11) **EP 0 516 354 B1**
(45) Date of publication and mention of the grant of the patent: **09.04.1997**
(21) Application number: 92304660.1
(22) Date of filing: 22.05.1992
(51) Int. Cl.: C03C 13/00, C03C 3/087

(54) **Glass composition and use**
Glaszusammensetzung und deren Verwendung
Composition de verre et son utilisation

(30) Priority: 25.05.1991 GB 9111401
(43) Date of publication of application: 02.12.1992
(73) Proprietor: OWENS-CORNING BUILDING PRODUCTS (UK) LIMITED, St Helens, Merseyside WA10 3NS (GB)
(72) Inventor: Yale, Brian, Ormskirk, Lancashire L39 4SP (GB); Mason, Allen Frank, Greater Manchester (GB); Shorrock, Peter, Wigan, Greater Manchester (GB); Edwards, Norman Anthony, Ormskirk, Lancashire L39 6RN (GB)
(74) Representative: Blatchford, William Michael

(56) References cited:
- EP-A- 0 399 320
- US-A- 4 203 746
- US-A- 4 402 767
- CHEMICAL ABSTRACTS, vol. 97, no. 20, 1982, Columbus, Ohio, US; abstract no. 167698Y, M. CZAJA ET AL.: 'Results of the selection of technological and design parameters for production of glass fibers' page 299 ;

## Description

This invention relates to a boric oxide free glass composition capable of being spun into fibres, it also relates to a method of spinning compositions according to the invention in a spinner made from a mechanically alloyed or oxide dispersion strengthened alloy and to glass fibre insulation produced from the compositions according to the invention.

Glass compositions are known for use in the technique of fiberizing glass using a centrifugal spinner. The compositions have customarily incorporated boric oxide in order to give them temperature/viscosity characteristics that will enable the glass to pass freely through orifices in the centrifugal spinner wall at a temperature sufficiently low to prevent excessive corrosion and erosion of the spinner. A problem with the use of boric oxide is that boron is volatile and may escape from the glass melting tank to cause pollution problems. Furthermore it tends to condense on regenerators thereby fouling them up and preventing use of such devices to improve the thermal efficiency of fuel fired glass melting tanks.

GB 2 041 910 proposes the reduction or elimination of boric oxide with a consequent rise in liquidus temperature and high levels of alumina or baria. These reduced boric oxide compositions are acknowledged to be virtually impossible to fiberize on an industrial basis by the prior art spinning techniques. A technique involving the use of a novel spinner shape is proposed, but, in practice, the corrosion of such a spinner when fabricated from conventional alloy is unacceptably high. Also the glass compositions according to this patent have unacceptably low durability.

US Patent 4 402 767 proposes a novel spinner fabrication process to produce a mechanically alloyed or oxide dispersion strengthened alloy by a combination of warm working, annealing and hot forming processes. Such spinners are claimed to have excellent resistance against molten glass attack and are said to be capable of producing glass fibres and mineral wool at temperatures as high as 1315°C. No details of glass fibre production are given in the specification.

The problem has been to identify boron free glass compositions which have the required durability and can be used in high temperature spinners such as those described in US 4 402 767. Although the absence of boric oxide gives rise to a deterioration in the aqueous durability of the glass, we have identified a range of compositions for which the durability is satisfactory.

According to the present invention insulating glass fibres comprise a boric oxide free glass composition spun into fibres, consisting of the following components expressed as weight percent:

| | |
|---|---|
| SiO₂ | 66-73 |
| Al₂O₃ | 0.8-4 |
| R₂O = Na₂O+K₂O | 14-17.5 |
| CaO | 6.5-12 |
| SiO₂ + Al₂O₃ | 69-74 |
| K₂O | 0.5-2 |
| Na₂O | 13-16.5 |

and further Fe₂O₃, MgO and SO₃ as additional components. Such glasses have a viscosity of 1000 poise or less at temperatures up to about 1200°C and a liquidus at least 130°C below the 1000 poise temperature.

The additional components may be present in the following amounts: 0-3.3% Fe₂O₃; 0-5% MgO; 0-0.6% SO₃, all expressed as weight percent.

Preferably the components are present in weight percentages within the following ranges:

| | |
|---|---|
| SiO₂ | 67-72.4 |
| Al₂O₃ | 1-4 |
| R₂O | 14.5-17 |
| K₂O | 0.5-2 |
| Na₂O | 13.5-16.5 |
| CaO | 7-11.2 |
| Fe₂O₃ | 0.1-2.5 |
| MgO | 0.2-4.4 |
| SiO₂ + Al₂O₃ | 70-73.7 |

Most preferably the components are present in weight percentages within the following ranges

| | |
|---|---|
| SiO₂ | 67-70 |
| Al₂O₃ | 2-4 |
| Na₂O | 14-15.5 |
| K₂O | 0.5-1.5 |
| MgO | 3-4.5 |
| CaO | 7-8.5 |
| Fe₂O₃ | 0.3-2 |
| SO₃ | 0-0.3 |
| SiO₂ + Al₂O₃ | 70-72 |
| Na₂O + K₂O | 15-16.5 |

A high level of Na₂O is needed to give a low liquidus temperature but the preferred narrow range of MgO allows the Na₂O to be kept to a minimum so optimising durability while maintaining liquidus at least 160 centigrade degrees below the 1000 poise viscosity temperature, which is advantageously below 1170°C.

The invention will now be described with reference to the following non-limiting examples 1-28. Low levels of SO₃, K₂O and Fe₂O₃ are recorded as a minimum in these examples. In fact they are only present at the lower levels as impurities in the raw materials and do not make a significant contribution to the properties of the glass fibres. Details of the examples and durability tests are given in the Table. It should be noted that Example 18 falls outside the scope of the present invention as its low level of alumina renders it insufficiently durable.

There is no established international test procedure for assessing the suitability of a glass for glass fibre insulation applications. It has become the practice to use the laboratory ware test of ISO 719 as it gives a useful guide to the aqueous durability and weathering resistance of the glass. In this test 2g of glass grains are treated with distilled water for 60 mins at 98°C and the extracted alkali titrated against 0.01 M HCL. The durability is described in terms of the alkali extracted per gram of glass as calculated from the acid required to neutralise. The relevant classes for glass wool are ISO Class 3 - from 62 to 264 micrograms of alkali per gram; and Class 4 - from 265 to 620 micrograms per gram. Glass wool is preferably in Class 3 but a good Class 4 may be acceptable because the performance of the insulation is a function of both glass and resin binder, and binders are available for use with higher release glasses. A class 3 rating is good and a class 4 rating is acceptable, but not as good.

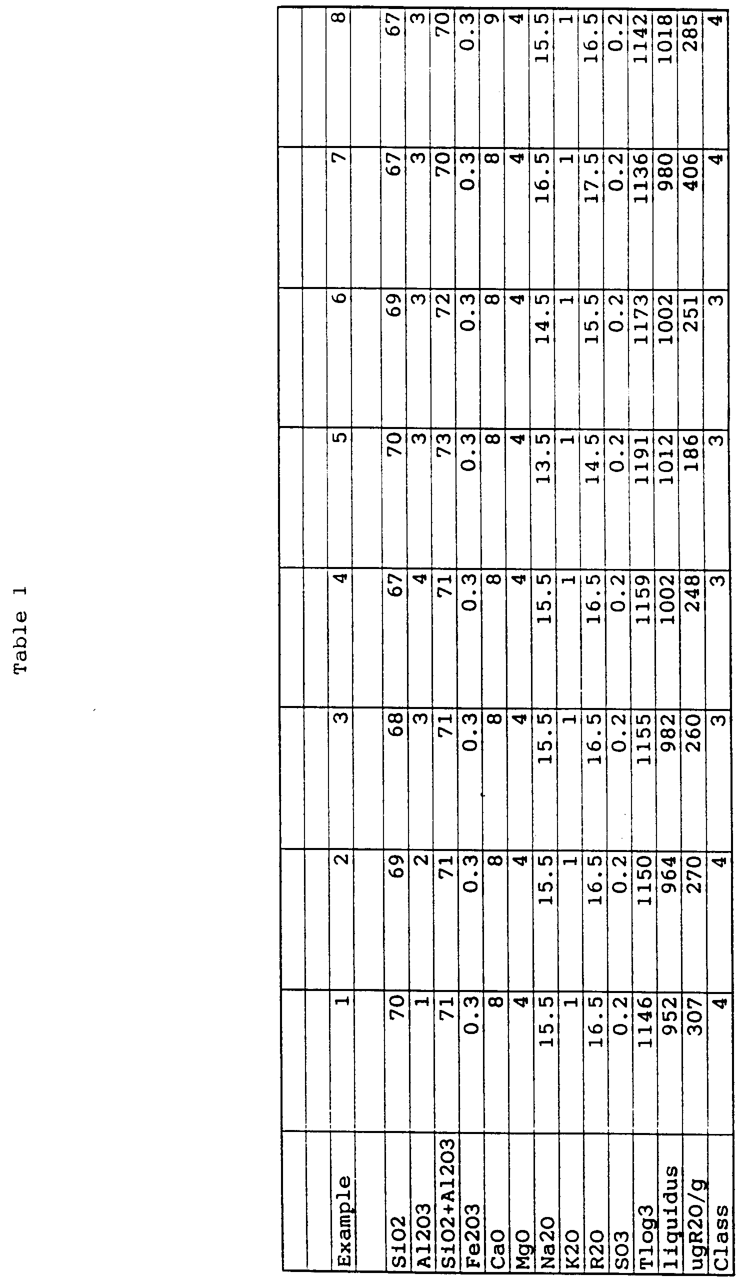

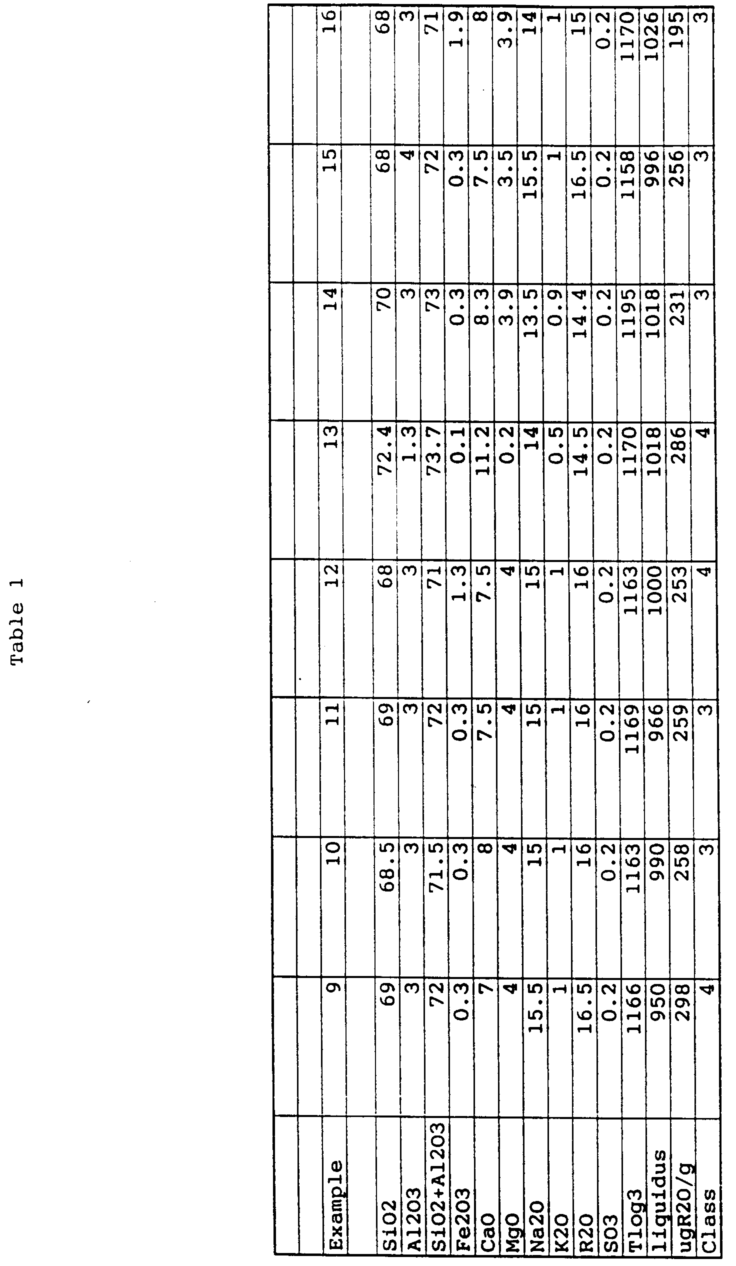

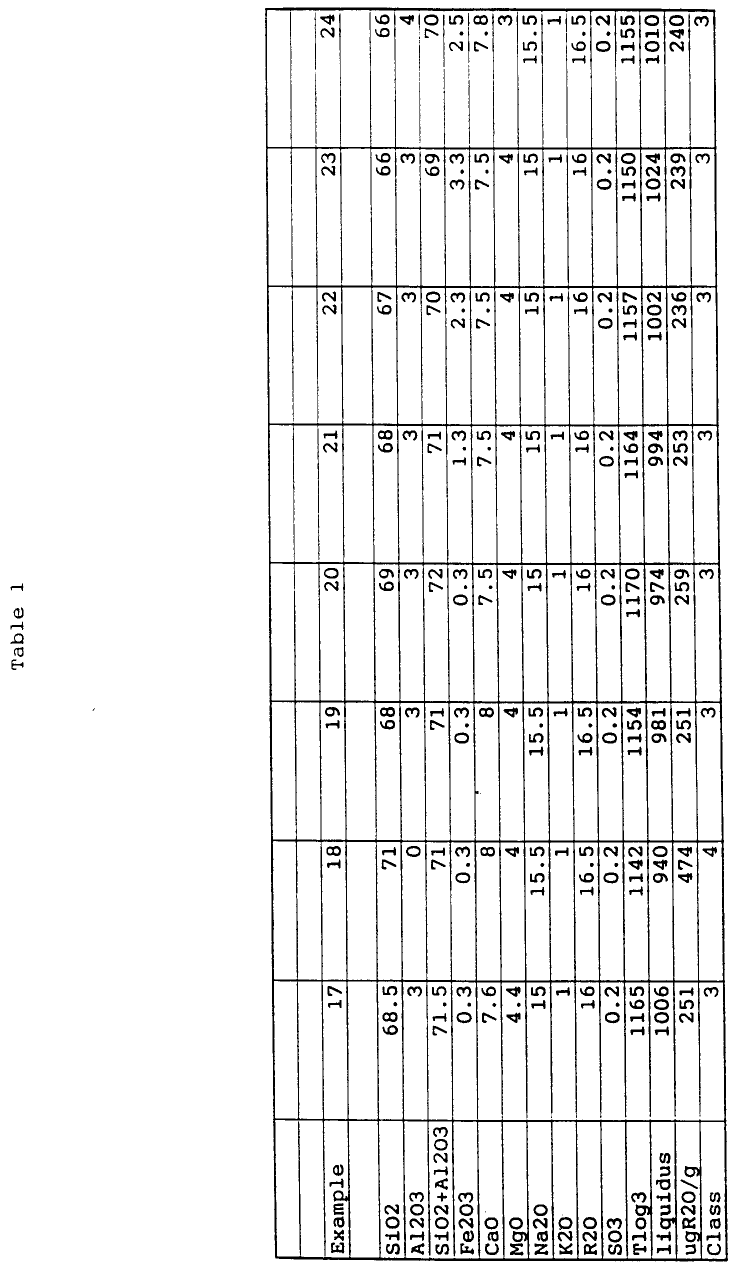

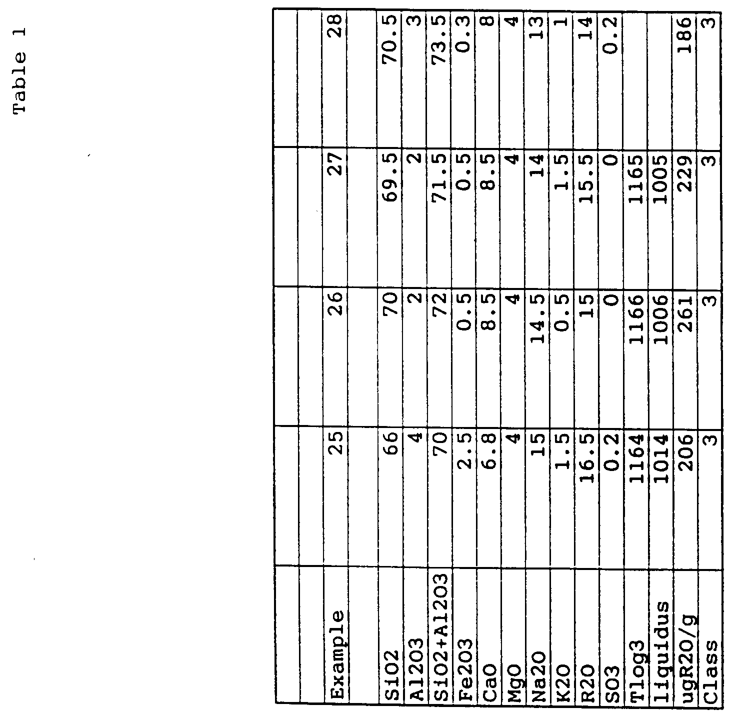

## Claims

1. Insulating glass fibres comprising a boric oxide free glass composition spun into fibres, consisting of the following components expressed as weight percent:
| | |
|---|---|
| SiO₂ | 66-73 |
| Al₂O₃ | 0.8-4 |
| R₂O = Na₂O+K₂O | 14-17.5 |
| CaO | 6.5-12 |
| SiO₂ + Al₂O₃ | 69-74 |
| K₂O | 0.5-2 |
| Na₂O | 13-16.5 |
and further Fe₂O₃, MgO and SO₃ as additional components.

2. Insulating glass fibres according to claim 1, wherein the additional components are present in the following amounts expressed as wt %.
| | |
|---|---|
| Fe₂O₃ | 0-3.3 |
| MgO | 0-5 |
| SO₃ | 0-0.6 |

3. Insulating glass fibres according to claim 1 or 2, wherein the components are present in weight percentages within the following ranges.
| | |
|---|---|
| SiO₂ | 67-72.4 |
| Al₂O₃ | 1-4 |
| R₂O | 14.5-17 |
| K₂O | 0.5-2 |
| Na₂O | 13.5-16.5 |
| CaO | 7-11.2 |
| Fe₂O₃ | 0.1-2.5 |
| MgO | 0.2-4.4 |
| SiO₂ + Al₂O₃ | 70-73.7 |

4. Insulating glass fibres according to claim 3, wherein the components are present in weight percentages within the following ranges.
| | |
|---|---|
| SiO₂ | 67-70 |
| Al₂O₃ | 2-4 |
| Na₂O | 14-15.5 |
| K₂O | 0.5-1.5 |
| MgO | 3-4.5 |
| CaO | 7-8.5 |
| Fe₂O₃ | 0.3-2 |
| SO₃ | 0-0.3 |
| SiO₂ + Al₂O₃ | 70-72 |
| Na₂O + K₂O | 15-16.5 |

5. An insulating glass fibre production process including the spinning of molten glass at a high temperature in a spinner made from a mechanically alloyed or oxide dispersion strengthened alloy to produce fibres having a composition according to any preceding claim.

## Patentansprüche

1. Isolierende Glasfasern, die eine boroxidfreie Glaszusammensetzung umfassen, die in Fasern gesponnen ist, welche aus den folgenden, als Massenanteil ausgedrückten Komponenten besteht:
| | |
|---|---|
| SiO₂ | 66-73 |
| Al₂O₃ | 0,8-4 |
| R₂O = Na₂O + K₂O | 14-17,5 |
| CaO | 6,5-12 |
| SiO₂ + Al₂O₃ | 69-74 |
| K₂O | 0,5-2 |
| Na₂O | 13-16,5 |
und weiter Fe₂O₃, MgO und SO₃ als zusätzliche Komponenten.

2. Isolierende Glasfasern nach Anspruch 1, worin die zusätzlichen Komponenten in den folgenden, als Massenanteil ausgedrückten Mengen vorliegen.
| | |
|---|---|
| Fe₂O₃ | 0-3,3 |
| MgO | 0-5 |
| SO₃ | 0-0,6 |

3. Isolierende Glasfasern nach Anspruch 1 oder 2, worin die Komponenten in Massenanteilen innerhalb der folgenden Bereiche vorliegen.
| | |
|---|---|
| SiO₂ | 67-72,4 |
| Al₂O₃ | 1-4 |
| R₂O | 14,5-17 |
| K₂O | 0,5-2 |
| Na₂O | 13,5-16,5 |
| CaO | 7-11,2 |
| Fe₂O₃ | 0,1-2,5 |
| MgO | 0,2-4,4 |
| SiO₂ + Al₂O₃ | 70-73,7 |

4. Isolierende Glasfasern nach Anspruch 3, worin die Komponenten in Massenanteilen innerhalb der folgenden Bereiche vorliegen.
| | |
|---|---|
| SiO₂ | 67-70 |
| Al₂O₃ | 2-4 |
| Na₂O | 14-15,5 |
| K₂O | 0,5-1,5 |
| MgO | 3-4,5 |
| CaO | 7-8,5 |
| Fe₂O₃ | 0,3-2 |
| SO₃ | 0-0,3 |
| SiO₂ + Al₂O₃ | 70-72 |
| Na₂O + K₂O | 15-16,5 |

5. Ein Verfahren zur Herstellung einer isolierenden Glasfaser, das das $pinnen von geschmolzenem Glas bei einer hohen Temperatur in einem Spinner umfaßt, der aus einer mechanisch legierten oder oxiddispersionsgestärkten Legierung hergestellt ist, um Fasern mit einer Zusammensetzung nach irgendeinem vorhergehenden Anspruch zu erzeugen.

## Revendications

1. Fibres de verre isolantes comprenant une composition de verre dépourvue d'oxyde borique filée en fibres, comprenant les composants suivants, exprimés en pourcentage en poids :
| | |
|---|---|
| SiO₂ | 66-73 |
| Al₂O₃ | 0,8-4 |
| R₂O = Na₂O + K₂O | 14-17,5 |
| CaO | 6,5-12 |
| SiO₂ + Al₂O₃ | 69-74 |
| K₂O | 0,5-2 |
| Na₂O | 13-16,5 |
et, en outre, Fe₂O₃, MgO et SO₃ comme composants additionnels.

2. Fibres de verre isolantes selon la revendication 1, dans lesquelles les composants additionnels sont présents en les quantités suivantes exprimées en pourcentage en poids :
| | |
|---|---|
| Fe₂O₃ | 0-3,3 |
| MgO | 0-5 |
| So₃ | 0-0,6 |

3. Fibres de verre isolantes selon la revendication 1 ou la revendication 2, dans lesquelles les composants sont présents en les pourcentages en poids à l'intérieur des plages suivantes :
| | |
|---|---|
| SiO₂ | 67-72,4 |
| Al₂O₃ | 1-4 |
| R₂O | 14,5-17 |
| K₂O | 0,5-2 |
| Na₂O | 13,5-16,5 |
| CaO | 7-11,2 |
| Fe₂O₃ | 0,1-2,5 |
| MgO | 0,2-4,4 |
| SiO₂ + Al₂O₃ | 70-73,7 |

4. Fibres de verre isolantes selon la revendication 3, dans lesquelles les composants sont présents en les pourcentages en poids à l'intérieur des plages suivantes :
| | |
|---|---|
| SiO₂ | 67-70 |
| Al₂O₃ | 2-4 |
| Na₂O | 14-15,5 |
| K₂O | 0,5-1,5 |
| MgO | 3-4,5 |
| CaO | 7-8,5 |
| Fe₂O₃ | 0,3-2 |
| SO₃ | 0-0,3 |
| SiO₂ + Al₂O₃ | 70-72 |
| Na₂O + K₂O | 15-16,5 |

5. Procédé de production de fibres de verre isolantes comprenant le filage d'un verre fondu à une température élevée dans une fileuse faite d'un alliage mécaniquement allié ou renforcé par une dispersion d'onde pour produire des fibres ayant une composition selon l'une quelconque des revendications précédentes.
